# FASCICULE DE BREVET EUROPEEN

(11) **EP 2 230 426 B1**
(45) Date de publication et mention de la délivrance du brevet: **30.07.2014**
(21) Numéro de dépôt: 10305277.5
(22) Date de dépôt: 19.03.2010
(51) Int. Cl.: F16K 31/00, F16K 31/56

(54) **Actionneur de clapet, notamment de clapet coupe-feu**
Ventilantrieb, insbesondere für Brandschutzklappen
Valve actuator, in particular for fire dampers

(30) Priorité: 20.03.2009 FR 0951781
(43) Date de publication de la demande: 22.09.2010
(73) Titulaire: Vraco SAS, 38510 Morestel (FR)
(72) Inventeur: Willoquet, Jean-Baptiste, 38630 Les Avenières (FR)
(74) Mandataire: Herrburger, Pierre

(56) Documents cités:
- EP-A1- 1 830 117
- FR-A1- 2 730 546
- US-B2- 6 491 055

## Description

### Domaine de l'invention

La présente invention concerne un actionneur de clapet, notamment le volet d'un clapet coupe-feu mis en position d'armement et déclenché par un ordre de déclenchement associé à un évènement, ayant un boîtier et un axe d'entraînement porté par le boîtier, solidaire du volet et relié à un ressort d'accumulateur bandé en position d'armement et rappelant le volet en position active et des organes de déclenchement commandés par des évènements (température extérieure, température intérieure, déclenchement électrique, déclenchement manuel), comprenant
- un chariot guidé en translation,
   * solidaire en mouvement de l'axe d'entraînement par une liaison à roue dentée et crémaillère,
   * muni d'une butée d'armement,
- un dispositif d'armement relié au chariot par une liaison libérable par un dispositif de déclenchement dès que le chariot est une position d'armement, et
- un levier porté par le boîtier coopérant avec la butée du chariot pour le retenir en position d'armement.

### Etat de la technique

Il existe différents modes de réalisation d'actionneurs de clapet, notamment de clapets coupe-feu du type défini ci-dessus. Mais ils présentent l'inconvénient d'une structure relativement compliquée.

Le document EP 1 830 117 A1 décrit un actionneur de clapet conforme au préambule de la revendication 1.

### But de l'invention

La présente invention a pour but de développer un actionneur de clapet, notamment pour actionner le volet d'un clapet coupe-feu, qui soit de réalisation simple tout en assurant toutes les sécurités de fonctionnement et de déclenchement soit selon un signal de déclenchement généré par un circuit de commande traitant les signaux de capteur, notamment de capteur de sécurité ou encore permettant le déclenchement à titre de contrôle de façon manuelle dans des conditions de fonctionnement simple et en sécurité, facilitant également les travaux d'entretien ou d'intervention sur l'actionneur.

### Exposé et avantages de l'invention

A cet effet, l'invention concerne un actionneur ce clapet du type défini ci-dessus **caractérisé en ce que** le chariot guidé en translation (selon la direction D), dans le boîtier entre la position d'armement (direction A) et la position déclenchée (direction B) comporte
- une crémaillère engrenant avec le pignon de l'axe de sortie relié au volet du clapet,
- un appui pour un ressort accumulateur d'énergie mécanique de déclenchement, agissant dans le sens du déclenchement ,
- un organe d'appui pour un organe d'armement entraînant le chariot de sa position déclenchée à sa position d'armement pour se séparer ensuite de l'organe d'appui en fin de course d'armement,
- une encoche de verrouillage pour recevoir un organe de verrouillage porté par un bras de verrouillage, monté pivotant, poussé par un ressort vers sa position de verrouillage,
- un levier coopérant d'une part, avec une ventouse magnétique qui retient le levier en position verrouillée et d'autre part, avec un ressort poussant le levier vers la position déverrouillée en entraînant le bras vers la position déverrouillée,
- un circuit de commande assurant la commande de déclenchement par une action sur la ventouse magnétique et sur l'organe d'actionnement pour le mouvement d'armement du chariot.

L'actionneur selon l'invention a l'avantage d'être d'une réalisation très simple grâce à la combinaison des actions de déclenchement réalisées par une seule pièce, à savoir le chariot, qui permet le mouvement d'armement et d'ouverture du volet et ensuite le mouvement de déclenchement du volet en transmettant, lors du mouvement d'armement, l'action d'un moteur à la fois sur l'axe du volet du clapet pour l'ouvrir et sur le ressort accumulateur de force.

En position armée, le chariot assure le maintien du volet ouvert et le ressort accumulateur d'énergie en position bandée. Enfin, en position de déclenchement, le chariot transmet le couple d'entraînement au volet du clapet pour le fermer en transformant le mouvement de translation sous la poussée du ressort accumulateur, de forme hélicoïdale, à l'axe portant le volet.

Suivant une caractéristique avantageuse, le chariot est une plaque munie d'une fenêtre dont le bord orienté dans la direction de translation forme la crémaillère et le pignon denté est logé dans la fenêtre dans le plan de la plaque, l'encoche de verrouillage est réalisée dans une coulisse de la plaque.

Cette forme de réalisation du chariot est à la fois simple ; il peut être réalisé dans une plaque de tôle découpée au laser ce qui permet de réaliser simplement le chariot avec ses différents moyens d'entraînement et de retenue pour engrener avec le segment denté porté par l'axe du volet, coopérer par sa coulisse avec le galet constituant l'organe de verrouillage et avec le ressort en formant une surface d'appui pour celui-ci et en le guidant lors de la compression pendant le mouvement d'armement.

Suivant une autre caractéristique avantageuse, la coulisse forme une rampe pour pivoter le bras et repousser le levier contre la ventouse magnétique et l'y accrocher par action magnétique.

Ainsi, la coulisse assure notamment la double fonction de verrouillage du chariot en position armée grâce à son encoche de verrouillage mais grâce à sa forme de rampe, elle permet également de pivoter le bras de verrouillage de façon à bloquer le levier contre la ventouse électromagnétique et préparer ainsi le mouvement d'enclenchement du galet dans l'encoche de verrouillage à la poussée d'un ressort agissant uniquement sur le bras de verrouillage.

Suivant une autre caractéristique avantageuse, le levier est monté sur le pivot portant le bras et ce dernier porte une butée pour le levier de déverrouillage.

Suivant une autre caractéristique avantageuse, le levier est muni d'une plaque ferromagnétique coopérant avec la ventouse magnétique. Cette réalisation consistant à séparer la réalisation de la contreplaque c'est-à-dire de la plaque ferromagnétique destinée à coopérer avec la ventouse et le levier, facilite la fabrication du levier et permet de réaliser celui-ci, par exemple comme tronçon d'une cornière en équerre.

Suivant une autre caractéristique avantageuse, le chariot comporte une languette prolongeant l'appui du ressort accumulateur pour le guider. Cet organe de guidage pour le ressort est particulièrement utile pour des raisons de sécurité, pour éviter que le ressort qui doit fournir une poussée importante, ne risque de s'échapper par flexion de son appui contre le chariot.

Suivant une autre caractéristique, le bras de déverrouillage est constitué par deux plaques venant de part et d'autre du chariot et portant entre elle le galet formant l'organe de verrouillage.

La réalisation du bras de verrouillage sous la forme de deux plaques prenant en sandwich la partie du chariot munie de la coulisse, constitue une sécurité intéressante pour éviter que notamment la poussée brutale du ressort au moment du déclenchement ne risque de faire échap-échapper le galet de la coulisse soit pendant la course rapide du chariot par rapport au galet soit en fon de course.

Suivant une autre caractéristique avantageuse, la partie du bras de verrouillage comporte une patte repliée et le boîtier loge un moyen de déclenchement manuel constitué par un axe portant une broche venant s'appuyer contre la patte repliée du bras de verrouillage, l'axe étant muni à l'extérieur du boîtier d'un moyen d'actionnement mécanique pour faire tourner cet axe et provoquer le déclenchement de l'actionneur.

### Dessins

La présente invention sera décrite ci-après de manière plus détaillée à l'aide d'un mode de réalisation d'un actionneur de clapet coupe-feu représenté schématiquement dans les dessins annexés dans lesquels :
- la figure 1 est une vue d'ensemble de l'actionneur selon l'invention, combiné à un clapet coupe-feu,
- la figure 2 est une vue du chariot et du pignon d'entraînement du volet,
- la figure 3A est une vue en plan du bras de verrouillage,
- la figure 3B montre le levier accroché à la ventouse électromagnétique,
- la figure 3C montre le levier libéré de la ventouse électromagnétique,
- la figure 4 montre les éléments principaux de l'actionneur :
   * la figure 4A est une vue en plan,
   * la figure 4B est une vue de côté et de gauche,
   * la figure 4C est une vue de dessous,
- la figure 5 est un schéma simplifié du chariot et des moyens d'armement et de déclenchement agissant sur le chariot,
- les figures 6A-6D montrent une vue partielle du chariot et de l'organe d'armement dans les différentes position de la course d'armement du chariot :

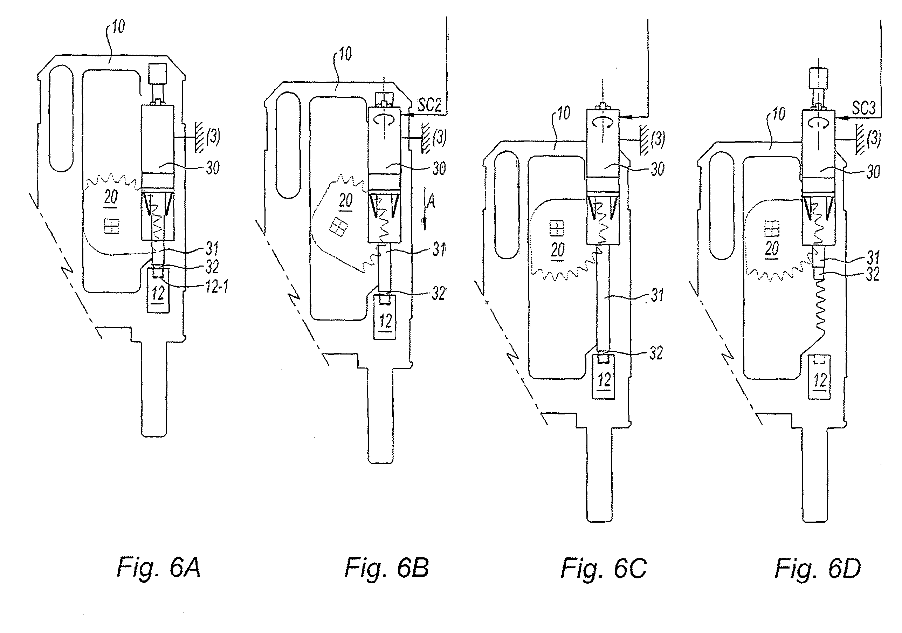

   * la figure 6A montre la position du chariot après le déclenchement de l'actionneur et avant la course d'armement,
   * la figure 6B montre la course d'armement,
   * la figure 6C montre la fin de la course d'armement,
   * la figure 6B montre le retrait de l'organe d'armement par rapport à la butée,

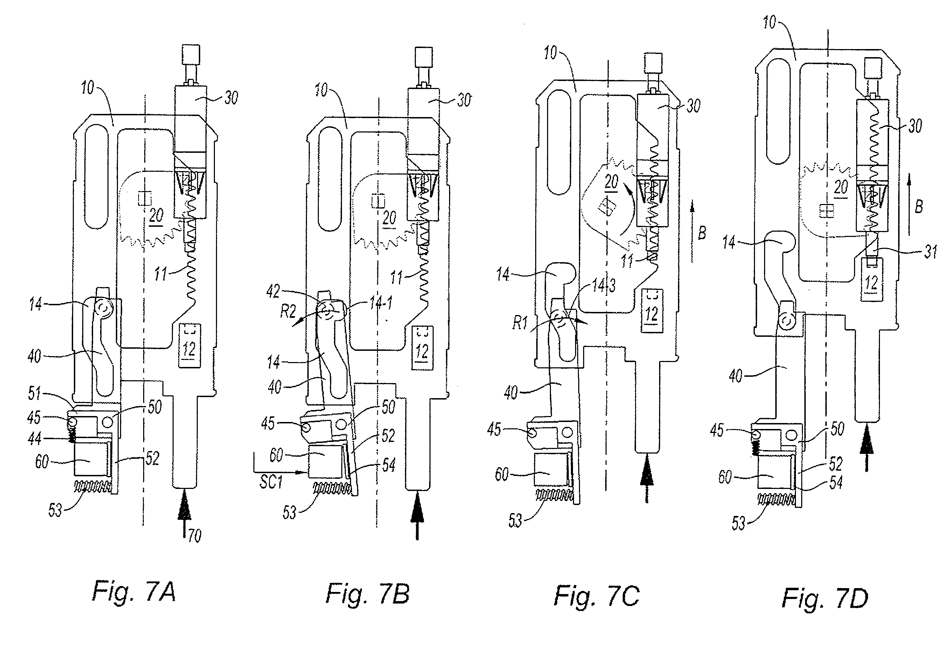

- les figures 7A-7D montrent quatre étapes successives caractéristiques de la séquence de fermeture commandée par l'actionneur :
   * la figure 7A montre la position d'armement,
   * la figure 7B montre la position de déverrouillage du chariot,
   * la figure 7C montre une position du chariot pendant la course de déclenchement,
   * la figure 7D montre la position finale du chariot en position déclenchée,

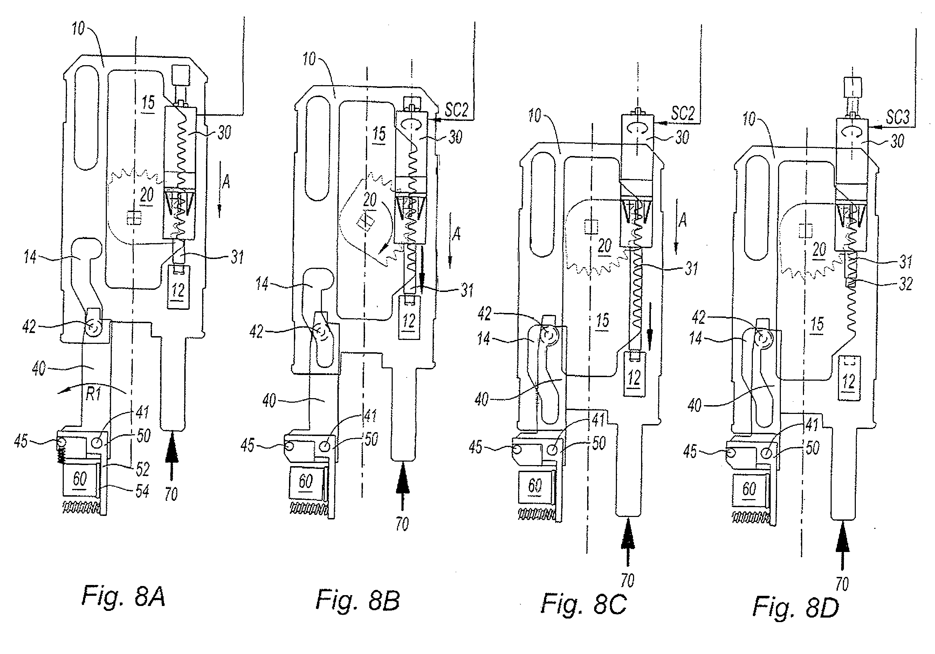

- les figures 8A-8D montrent les phases caractéristiques d'une séquence d'arment de l'actionneur :
   * la figure 8A montre la position déclenchée avant la course d'armement,
   * la figure 8B montre une position intermédiaire d'armement,
   * la figure 8C est la position du chariot à la fin de la course d'arment,
   * la figure 8D montre le retrait de l'organe d'actionnement.

### Description d'un mode de réalisation de l'invention

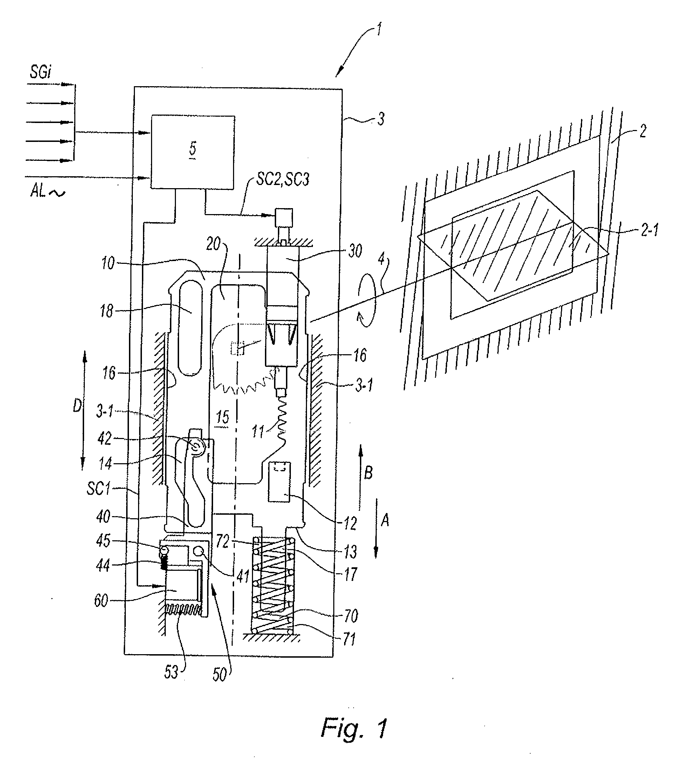

Selon la figure 1, l'invention concerne un actionneur 1 pour commander la fermeture du volet 2-1 d'un clapet coupe-feu 2 en fonction de signaux de déclenchement liés à des évènements tels que la température extérieure ou la température intérieure d'un côté ou de l'autre du clapet, d'un déclenchement électrique venant d'une centrale ou autres signaux de ce type et aussi un déclenchement manuel.

L'actionneur 1 comporte, logé dans un boîtier 3, un circuit de commande 5 et un chariot 10 assurant la combinaison des actions à exercer sur le volet 2-1 du clapet 2. Ce chariot 10 est normalement prêt à être déclenché pour entraîner le volet 2-1 et en assurer la fermeture ou, le cas échéant, après une manoeuvre de fermeture, de nouveau son ouverture.

L'actionneur 1 comporte un moyen de déclenchement et un moyen d'armement ainsi qu'un générateur de couple de fermeture.

Le mouvement d'armement consiste à
- mettre le chariot en position d'armement,
- accumuler de l'énergie pour un éventuel déclenchement,
- mettre le clapet en position ouverte.

Le mouvement de déclenchement consiste, à partir de la position d'armement, à libérer l'actionneur, c'est-à-dire le chariot 10 permettant d'assurer le mouvement de fermeture du volet du clapet avec l'énergie mécanique accumulée. Les différentes actions sont assurées par l'intermédiaire du chariot 10 qui combine l'action du générateur de couple pour le clapet, celle du moyen d'armement et celle du moyen de déclenchement, la gestion des opérations étant assurée par le circuit de commande 5 qui reçoit les signaux SGi liés aux évènements, traite ces signaux et génère des signaux de commande SC1, SC2.

Un déclenchement manuel de contrôle de fonctionnement permet de libérer directement le chariot 10 indépendamment des signaux envoyés par le circuit de commande 5.

Le chariot 10 et les différents moyens sont logés dans le boîtier 3 muni d'une manivelle d'armement non représentée ainsi que de moyens de connexion pour les capteurs fournissant les signaux SGi et l'alimentation AL assurant l'alimentation électrique et aussi les moyens de liaison mécanique entre l'axe de sortie 4 et le volet du clapet 2.

Selon la figure 1, l'actionneur 1 comporte un chariot 10 guidé en translation selon la direction D pour effectuer un mouvement d'armement (flèche A) ou un mouvement de déclenchement (flèche B). Le chariot 10 comporte
- une crémaillère 11 engrenant avec un pignon 20 porté par l'axe de sortie 4 relié au volet 2-1 du clapet 2 ainsi qu'un appui 13 pour un ressort 70 fonctionnant comme ressort accumulateur d'énergie mécanique de déclenchement, agissant dans la direction de translation D dans le sens du déclenchement B,
- un organe d'appui 12 pour un organe d'armement 30 entraînant le chariot 10 de sa position déclenchée à sa position d'armement (direction A) pour se séparer en fin de mouvement de l'organe d'appui 12 et
- une encoche de verrouillage 14-1 pour recevoir un organe de verrouillage 42 porté par un bras de verrouillage 40 commandé dans le sens du verrouillage et du déverrouillage par une ventouse magnétique 60 en fonction de signaux d'actionnement SC1 fournis par un circuit de commande 5.

Le bras de verrouillage 40 est monté pivotant autour d'un pivot 41 du boîtier 3. Le bras 40 est poussé par un ressort 44 vers sa position de verrouillage, c'est-à-dire la position dans laquelle son organe de verrouillage 42 est engagé dans l'encoche de verrouillage 14-1.

L'actionneur 1 comporte également un levier 50 coopérant d'une part avec la ventouse magnétique 60 qui retient le levier en position de verrouillage et, d'autre part, avec un ressort 53 poussant le levier 50 vers la position déverrouillée en entraînant le bras 40 vers sa position déverrouillée.

L'actionneur 1 comporte un circuit de commande 5 assurant la commande de déclenchement par un signal SC1 agissant sur la ventouse magnétique 60 pour la libérer brièvement et un signal SC2 commandant l'organe d'actionnement 30 pour son mouvement d'armement du chariot 10 puis son mouvement de retour libérant le chariot 10.

Ces différents moyens sont intégrés dans le boîtier 3 relié de manière amovible à l'axe d'entraînement 4 du volet 2-1 du clapet 2 par une liaison d'engagement par la forme, telle qu'un emboîtement non détaillé.

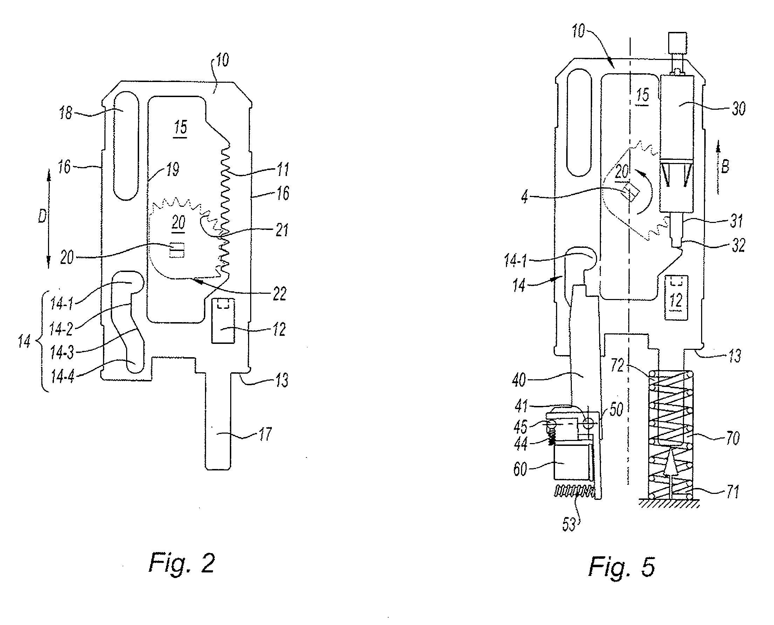

Selon les figures 1 et 2, le chariot 10 est constitué par une plaque notamment en tôle, découpée par exemple au laser et montée coulissante entre des guides 3-1 du boîtier 3 avec lesquels le chariot 10 coopère par ses côtés formant des bords de guidage 16 ainsi que par une coulisse rectiligne 18 complétant le guidage du chariot et le retenant au boîtier par un pion non représenté chevauchant la coulisse 18. La direction de mouvement du chariot 10 est représenté par la double flèche D qui, selon le sens de déplacement, correspond à la course d'armement ou à la course de déclenchement.

Le chariot 10 comporte une fenêtre 15 dont un côté est muni de la crémaillère 11 découpée dans l'épaisseur pour coopérer avec le pignon 20 constitué par un segment denté 21. Le pignon 20 porté par l'axe de sortie 4 de l'actionneur, est constitué par une plaque en forme de secteur de quart de cercle 22, pour que le segment denté 21 corresponde au mouvement de pivotement d'un quart de tour du volet entre sa position ouverte et sa position fermée, sans démultiplication de mouvement tout en étant situé dans le plan de la plaque du chariot 10 et dans l'espace disponible constitué par la fenêtre 15 entre la crémaillère 11 et le bord 19 de la fenêtre.

La course du chariot 10 peut être limitée dans le sens du déclenchement par une butée portée par le boîtier et, le cas échéant par la coulisse 18 ou l'extrémité du segment 14-4 de la coulisse 14. Le chariot 10 comporte également une languette 17 alignée sur la direction de coulissement D et servant de guide au ressort accumulateur 70, s'appuyant par une extrémité 71 contre le boîtier 3 et par l'autre extrémité 72 contre l'appui 13. La languette 17 évite le fléchissement du ressort accumulateur 70 puissant, notamment en position comprimée.

Le ressort 70 accumule de l'énergie mécanique poussant le chariot 10 dans le sens du déclenchement (flèche B).

Un bord du chariot 10 comporte une coulisse 14 recevant un organe de verrouillage 42 constitué par un galet porté par le bras de verrouillage 40 dont le fonctionnement sera décrit ultérieurement. La coulisse 14, globalement alignée dans la direction de coulissement D du chariot 10, se compose d'une extrémité formant une encoche 14-1, suivie d'une partie droite 14-2 puis d'une partie en forme de rampe 14-3 et enfin elle se termine par une partie droite 14-4. L'encoche 14-1 est une encoche de verrouillage pour tenir le chariot 10 en position d'armement en coopérant avec le galet constituant l'organe de verrouillage 42 du bras et la rampe 14-3 qui prépare la position d'enclenchement du chariot 10. Enfin, le chariot 10 porte la butée 12 servant d'appui pour l'organe de réarmement 30.

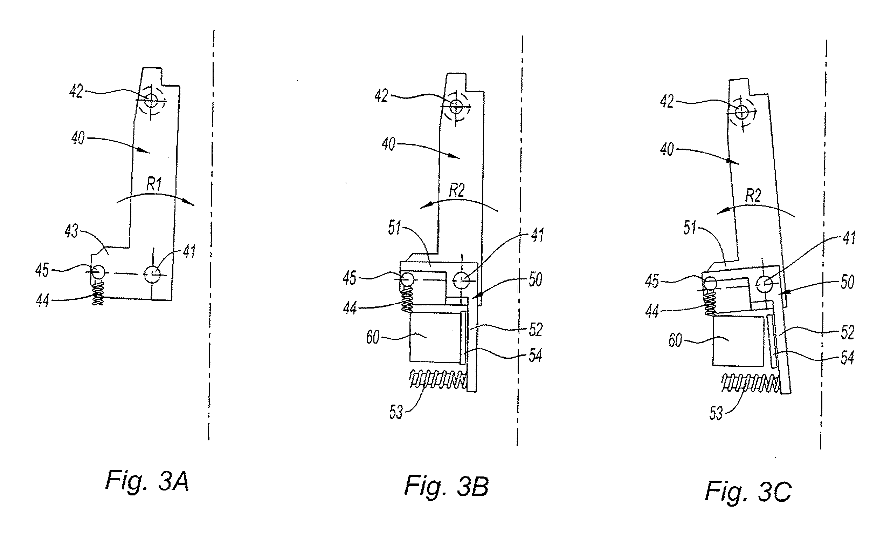

Les mouvements d'armement et de déclenchement de l'actionneur 1 utilisent un bras de verrouillage 40 représenté seul à la figure 3A et en combinaison avec un levier 50 et la ventouse magnétique 60 dans deux positions différentes aux figures 3B et 3C.

Selon la figure 3A, le bras de verrouillage 40 coopérant avec le chariot 10 est formé par une lame portée par un pivot 41 solidaire du boitier. L'extrémité de cette lame porte le galet 42 constituant l'organe de verrouillage logé dans la coulisse 14 du chariot 10

Le bras de verrouillage 40 comporte un branche 43 munie d'une butée 45 en forme de broche. Le bras de verrouillage 40 est poussé par un ressort 44 dans le sens du verrouillage (flèche R1).

Selon la figure 3B, le bras 40 coopère avec un levier 50 également monté sur le pivot 41 du bras 40. Ce levier 50 a deux branches 51, 52 ici en forme d'équerre. La première branche 51 coopère avec la butée en forme de broche 45 du bras 40 et la seconde branche 52 coopère avec la ventouse magnétique 60. Pour cela, indépendamment de la matière du levier 50, la branche 52 porte une contre-plaque ferromagnétique 54 attirée par la ventouse magnétique 60. La ventouse magnétique 60 est fixée au boîtier 3. Elle retient normalement la contre-plaque 54 par son aimantation naturelle et une impulsion électrique (signal SC1) appliquée à la ventouse 60 par le circuit de commande 5 permet de neutraliser pendant un court instant son champ magnétique de sorte que la contre-plaque 54 n'est plus retenue.

La seconde branche 52 du levier 50 est poussée par un ressort 53 agissant dans le sens opposé de l'attraction magnétique exercée par la ventouse 60 pour faire pivoter le bras 40 dans le sens R2 autour du pivot 41.

Il est à souligner que le ressort 44 appliqué au levier 40 a tendance à faire pivoter celui-ci dans le sens de l'enclenchement, c'est-à-dire dans le sens R1 opposé au sens R2.

La géométrie du levier 50, du bras 40 et des différents éléments de cet assemblage est telle que lorsque le levier 50 est retenu par la ventouse 60 par sa contre-plaque 54, le bras 40 est poussé par son ressort 44 pour que sa butée 45 soit appliquée contre la branche 51 et qu'ainsi le galet 42 se loge dans l'encoche 14-1 de la coulisse 14 et y reste maintenu.

En revanche, selon la figure 3C, lorsque la ventouse 60 a libéré la contre-plaque ferromagnétique 54, la branche 52 du levier 50 peut être repoussée par le ressort 53 de sorte que, par pivotement (R2) autour du pivot 41, la branche 51 repousse la butée 45 contre l'action du ressort 44, ce dernier exerçant un couple inférieur à celui du ressort 53 par rapport au pivot 41. Ce mouvement de pivotement du bras 40 dans le sens de la flèche R2 dégage ainsi l'organe de verrouillage 42, c'est-à-dire le galet 42 de l'encoche de verrouillage 14-1 de la coulisse. En effet, dès que la contre-plaque 54 est décollée de la ventouse magnétique 60, le champ magnétique n'est plus suffisant pour rappeler la contre-plaque 54 et le levier 50 contre la ventouse 60.

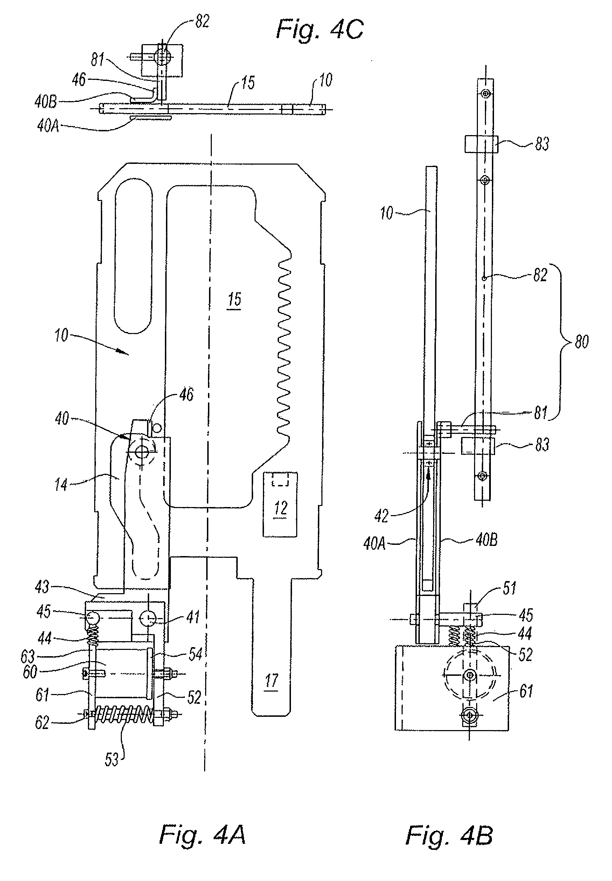

Les figures 4A-4C montrent de façon détaillée, les éléments coopérant avec le chariot 10.

La figure 4A montre la ventouse 60 fixée à une patte 61 solidaire du boîtier. La contreplaque 54 est fixée à la branche 52 et le ressort 53 est portée par une tige 62 solidaire de la patte 61. La patte 61 est également munie d'une tige 63 servant de guide au ressort 44 poussant contre la broche 45. En fait, ce ressort et le guide sont dédoublés (figure 4B).

La vue de gauche selon la figure 4B montre que le bras de verrouillage 40 est formé de deux plaques 40A, B, de même forme et venant de part et d'autre du chariot 10 en portant le galet 42 dans leur intervalle. La plaques 40B de dessous du bras de verrouillage 40 a une patte repliée 46 pour coopérer avec un moyen de déclenchement 80 permettant le déclenchement mécanique ou manuel. Ce moyen de déclenchement 80 comporte une broche 81 appliquée contre la patte repliée 46. Cette broche est portée par l'axe de déverrouillage 82 monté pivotant dans des paliers 83. Le pivotement de l'axe de déverrouillage 82 repousse la patte repliée 46 par la broche 81 libérant ainsi le chariot 10.

L'axe 82 se manoeuvre manuellement par un levier ou un organe analogue à l'extérieur du boîtier 3.

La figure 4C montre la broche 81, l'axe 82 et la patte 46 repliée à l'équerre de la partie 40B du bras de verrouillage 40.

En complément des figures 4A-4C, la figure 5 montre la disposition relative des différents moyens agissant sur le chariot 10 tels que l'organe d'armement 30, le bras de verrouillage 40 et son levier 50, la ventouse magnétique 60, le ressort accumulateur 70 et le segment denté 21 du pignon 20 relié à l'axe de sortie 4 sans l'organe de déclenchement manuel 80.

La position représentée est une position intermédiaire occupée par le chariot 10 à la suite du déclenchement. Le chariot 10 est entrainé dans le sens du déclenchement (flèche B) poussé par le ressort accumulateur 70, le bras de verrouillage 40 poussé par le ressort de déverrouillage 53 ayant dégagé le galet de l'encoche de verrouillage 14-1. Cette figure montre que la butée 12 portée par le chariot 10 s'est rapprochée de l'extrémité 32 de la tige 31 de l'organe d'armement 30.

Le déclenchement décrit peut être causé par un signal envoyé par le circuit de commande 5 ou une action manuelle sur l'axe 82 du moyen de déclenchement manuel 80.

Les figures 6A-6D montrent quatre positions successives caractéristiques du mouvement d'armement (direction A) à partir de la position déclenchée représentée à la figure 6A . Le chariot 10 est entrainé par l'organe d'armement 30 solidaire du boîtier et constitué par un motoréducteur muni d'une tige 31 déplacée en translation dans la direction A (ou ensuite dans la direction B) par une liaison de type vis/écrou transformant le mouvement de rotation du moteur de l'organe d'armement 30 en un mouvement de translation de la tige 31 dans le sens dépendant du sens de rotation du moteur électrique, l'ensemble constituant ainsi un motoréducteur.

L'organe d'armement 30 est en appui contre la butée 12 lorsque le chariot 10 est en position déclenchée, l'extrémité 32 de la tige 31 étant engagée dans le logement 12-1 pour tenir la tige 31 au cours du mouvement d'armement.

Selon la figure 6B, le signal SC2 du circuit de commande actionne l'organe d'armement 30 qui repousse le chariot 10 vers sa position d'armement (flèche A).

Selon la figure 6C, la tige 32 a conduit le chariot 10 dans sa position d'arment dans laquelle il reste maintenu par l'accrochage de l'organe de verrouillage 42 du bras de verrouillage 40 dans l'encoche de verrouillage 14-1 de la coulisse (comme cela a été vu ci-dessus).

La position de fin de course de la tige 31 est détectée par un capteur de fin de course non représenté, qui transmet un signal correspondant au circuit de commande 5. Ce dernier arrête la rotation du moteur de l'organe d'armement 30 et commande (signal SC3) le mouvement de rotation inverse de façon à rétracter la tige 32.

Selon la figure 6D, le motoréducteur de l'organe d'actionnement 30 rétracte la tige 31 pratiquement jusqu'à sa position de butée pour le chariot 10 venant en position de fermeture.

Le fonctionnement de l'actionneur 1 sera décrit ci-après de façon détaillée pour la séquence de fermeture du volet 2-1 du clapet 2 selon les figures 7A-7D et pour la séquence d'ouverture du volet à l'aide des figures 8A-8D montrant le déplacement relatif du chariot 10 et le pivotement du bras de verrouillage 40.

La figure 7A montre la position initiale de l'actionneur 1, supposé à l'état verrouillé et armé, c'est-à-dire enclenché. Le chariot 10 est rétracté. Le ressort accumulateur 70 est comprimé et pousse sur le chariot 10 immobilisé par l'accrochage du galet 42 du bras de verrouillage 40 dans l'encoche 14-1 de la coulisse 14 du chariot 10. Le ressort accumulateur 70 pousse sur le chariot 10 mais ne peut le déplacer.

Selon la figure 7B, une impulsion de déverrouillage (SC1) est envoyée par le circuit de commande 5 à la ventouse magnétique 60 qui libère ainsi la contre-plaque 54 de la seconde branche 52. Le levier 50 peut pivoter dans le sens de la flèche R2, repoussant la butée 45 contre l'action de son ressort 44 ce qui fait pivoter le bras de verrouillage 40 également dans la direction R2. Le galet 42 se dégage de l'encoche de verrouillage 14-1 ce qui libère le coulissement du chariot 10.

La figure 7C montre que sous l'action du ressort accumulateur 70, le chariot 10 étant libéré, il avance vers la position déclenchée (direction B) c'est-à-dire la position de fermeture du volet du clapet 2. Le galet 42 parcourt tout d'abord le segment droit 14-2 à la sortie de l'encoche de verrouillage 14-1 puis, le segment 14-3 formant une rampe.
Le mouvement du galet 42 sur la rampe 14-3 fait pivoter le bras 40 dans le sens de la flèche R1. A la fin de la rampe 14-3, le bras 40 aura pivoté et, par sa butée 45, il a entraîné la contre-plaque 54 en appui contre la ventouse magnétique 60. Ce mouvement se fait contre la poussée exercée par le ressort 53.

La figure 7D montre la contre-plaque 54 appliquée contre la ventouse 60, dont l'aimant bloque ainsi le levier 50. Le bras 40 reste alors libre pour tout mouvement ou jeu écartant la butée 45 de la branche 51, c'est-à-dire tout mouvement dans le sens R2.

Le mouvement du galet 42 dans la coulisse 14 est un mouvement relatif, le chariot 10 se déplaçant en translation longitudinalement selon la direction D et la coulisse 14 passant sur le galet 42 et le forçant à décrire un petit arc de cercle centré sur le pivot 41 du bras 40.

Il est à remarquer que pendant le mouvement représenté aux figures 7A-7D, le pignon 20 a été entrainé d'un quart de tour par le mouvement de la platine 10 et de sa crémaillère 11.

Les figures 8A-8D montrent la séquence d'ouverture du volet 2-1 par le mouvement d'armement du chariot 10 à partir de la position de fermeture du volet ou position déclenchée représentée à la figure 8A (identique à la position de la figure 7D) pour arriver à la position d'armement représentée à la figure 8D.

A la position fermée selon la figure 8A, le levier 50 est collé par sa contre-plaque 54 à la ventouse 60 et le galet 42 du bras 40 se trouve à l'extrémité 14-4 de la coulisse 14. La séquence d'ouverture du volet, c'est-à-dire d'armement de l'actionneur, s'effectue par l'intermédiaire de l'actionneur faisant pivoter le pignon 20 en sens inverse du mouvement de fermeture par son engrènement dans la crémaillère 11 et le mouvement de translation du chariot 10 dans la direction d'armement A poussé par l'action de l'organe d'armement 30. Le circuit de commande 5 agit sur l'organe d'armement 30 qui pousse par sa tige 31, le chariot 10 jusque dans sa position d'armement.

La figure 8B montre une position intermédiaire, au cours du mouvement d'ouverture. L'organe d'armement électromécanique 30 repousse le chariot 10 (flèche A) contre la force développée par le ressort 70 et comprime celui-ci de façon à accumuler de l'énergie pour un futur déclenchement.

Le levier 50 est bloqué par la ventouse magnétique 60 mais le bras 40 reste libre de pivoter autour de son pivot 41 pour permettre à la rampe 14-3 de la coulisse 14 de repousser le galet 42, c'est-à-dire le bras 40. Le mouvement de translation (flèche A) du chariot 10 produit le pivotement du volet par l'engrènement du segment denté 21 dans la crémaillère 11.

Selon la figure 8C, le chariot 10 poursuit son mouvement au-delà de la rampe 14-3 sur le segment droit 14-4 et contre l'action du ressort 70 de sorte que le galet 42 s'engage dans l'encoche 14-4 lorsqu'elle se présente en face du galet 42 ; le ressort 44 pousse sur le bras 40 pour le faire pivoter. Pendant ce mouvement, le levier 50 est fixe puisque sa branche 52 est accrochée par la contre-plaque 54 contre la ventouse magnétique 60. Le pivotement se poursuit jusqu'à ce que la butée 45 arrive contre la première branche 51 du levier 50. La géométrie des pièces est conçue pour que dans cette position, le galet 42 est au fond de l'encoche de verrouillage 14-1 de la coulisse 14.

Le mouvement du chariot 10 est assuré par l'organe d'armement 30 jusqu'à cette position du chariot 10 qui correspond à la position d'ouverture du volet 2-1 du clapet 2.

Selon la figure 8D, le circuit de commande 5 détecte la position de fin de course du chariot 10 dans le sens de l'armement et celle de la tige 31. Il arrête le moteur de l'organe d'actionnement 30 puis inverse son sens de rotation pour rétracter la tige 31 et libérer ainsi le chariot 10 pour un futur déclenchement. Le chariot 10 est alors en position d'armement.

### NOMENCLATURE

- 1: Actionneur
- 2: Clapet
- 2-1: Volet
- 3: Boîtier
- 3-1: Guide
- 4: Axe de sortie du boîtier
- 5: Circuit de commande

- 10: Chariot

- 11: Crémaillère
- 12: Butée pour l'organe d'armement
- 13: Appui du ressort accumulateur
- 14: Coulisse
- 14-1: Encoche de verrouillage
- 14-2: Segment droit
- 14-3: Rampe
- 14-4: Segment
- 15: Fenêtre
- 16: Bord de guidage
- 17: Languette
- 18: Coulisse rectiligne

- 20: Pignon
- 21: Segment denté
- 22: Secteur en quart de cercle

- 30: Organe d'armement
- 31: Tige
- 32: Extrémité de la tige

- 40: Bras de verrouillage
- 40A: Plaque
- 40B: Plaque
- 41: Pivot
- 42: Organe de verrouillage (galet)
- 43: Branche
- 44: Ressort
- 45: Butée
- 46: Patte repliée
- 50: Levier
- 51: Première branche
- 52: Seconde branche
- 53: Ressort
- 54: Contre-plaque

- 60: Ventouse magnétique
- 61: Patte
- 62: Tige

- 70: Ressort accumulateur

- 80, 90: Moyen de déclenchement mécanique
- 81, 91: Broche
- 82, 92: Axe de déverrouillage
- 83, 93: Palier

## Revendications

1. Actionneur de clapet, notamment le volet d'un clapet coupe-feu mis en position d'armement et déclenché par un ordre de déclenchement associé à un évènement, ayant un boîtier (1) et un axe d'entraînement (4) porté par le boîtier (1), solidaire du volet (2-1) et relié à un ressort accumulateur (70) bandé en position d'armement et rappelant le volet (2-1) en position active et des organes de déclenchement (60-80) commandés par des évènements (température extérieure, température intérieure, déclenchement électrique, déclenchement manuel),
comprenant
- un chariot guidé en translation,
* solidaire en mouvement de l'axe de sortie comporte une crémaillère (11) engrenant avec le pignon (20) de l'axe de sortie (4) relié au volet (2-1) du clapet (2),
* muni d'une butée d'armement,
- un dispositif d'armement relié au chariot par une liaison libérable par un dispositif de déclenchement dès que le chariot est dans une position d'armement, et
- un levier porté par le boîtier coopérant avec la butée du chariot pour le retenir en position d'armement,
**caractérisé en ce que**
le chariot (10) guidé en translation (selon la direction D), dans le boîtier (3) entre la position d'armement (direction A) et la position déclenchée (direction B) comporte
- un appui (13) pour le ressort (70) accumulateur d'énergie mécanique de déclenchement,
- un organe d'appui (12) pour un organe d'armement (30) entraînant le chariot (10) de sa position déclenchée à sa position d'armement pour se séparer ensuite de l'organe d'appui (12) en fin de course d'armement,
- une encoche de verrouillage (14-1) pour recevoir un organe de verrouillage (42) porté par un bras de verrouillage (40), monté pivotant dans le boîtier (41), poussé par un ressort (44) vers sa position de verrouillage,
- un levier de déverrouillage (50) monté dans le boîtier coopérant d'une part, avec une ventouse magnétique (60) qui retient le levier en position verrouillée et d'autre part, avec un ressort (53) poussant le levier (50) vers la position déverrouillée en entraînant le bras (40) vers la position déverrouillée,
- un circuit de commande (5) assurant la commande de déclenchement par une action sur la ventouse magnétique (60) et sur l'organe d'actionnement (30) pour le mouvement d'armement du chariot (10).

2. Actionneur selon la revendication 1,
**caractérisé en ce que**
le chariot (10) est une plaque munie d'une fenêtre (15) dont le bord orienté dans la direction de translation (D) forme la crémaillère (11) et le pignon denté (20) est logé dans la fenêtre (15) dans le plan de la plaque.

3. Actionneur selon la revendication 2,
**caractérisé en ce que**
l'encoche de verrouillage (14-1) est réalisée dans une coulisse (14) de la plaque, et
la coulisse (14) forme une rampe (14-3) pour pivoter le bras (40) et repousser le levier (50) contre la ventouse magnétique (60) et l'y accrocher par action magnétique.

4. Actionneur selon la revendication 1,
**caractérisé en ce que**
le levier (50) est monté sur le pivot (41) portant le bras (40) et ce dernier porte une butée (46) pour le levier de déverrouillage (50).

5. Actionneur selon la revendication 1,
**caractérisé en ce que**
le levier de déverrouillage (50) est muni d'une plaque ferromagnétique (54) coopérant avec la ventouse magnétique (60).

6. Actionneur selon la revendication 1,
**caractérisé en ce que**
le chariot (10) comporte une languette (17) prolongeant l'appui (13) du ressort accumulateur (70) pour le guider.

7. Actionneur selon la revendication 1,
**caractérisé en ce que**
le bras de déverrouillage (40) est constitué par deux plaques (40A, 40B) venant de part et d'autre du chariot et portant entre elle le galet (42) formant l'organe de verrouillage.

8. Actionneur selon la revendication 7,
**caractérisé en ce que**
la partie (40B) du bras de verrouillage comporte une patte repliée (46) et le boîtier (3) loge un moyen de déclenchement manuel constitué par un axe (82) portant une broche (81) venant s'appuyer contre la patte repliée (46) du bras de verrouillage, l'axe (82) étant muni à l'extérieur du boîtier d'un moyen d'actionnement mécanique pour faire tourner cet axe et provoquer le déclenchement de l'actionneur.

## Patentansprüche

1. Ventilantrieb, insbesondere für das Ventil einer Brandschutzklappe, die sich in der Spannstellung befindet und durch einen Auslösebefehl in Zusammenhang mit einem Ereignis ausgelöst wird, umfassend ein Gehäuse (1) und eine Antriebsachse (4), die vom Gehäuse (1) getragen wird, mit dem Ventil (2-1) fest verbunden ist und mit einer Speicherfeder (70) verbunden ist, die in der Spannstellung gehalten wird und das Ventil (2-1) in die aktive Stellung zurückstellt, und Auslöseorgane (60-80), die durch Ereignisse (Außentemperatur, Innentemperatur, elektrische Auslösung, manuelle Auslösung) betätigt werden,
umfassend:
- einen verschiebbar geführten Schlitten,
* der bewegungsfest mit der Ausgangsachse verbunden ist und eine Zahnstange (11) umfasst, die in das Zahnrad (20) der Ausgangsachse (4) eingreift, die mit dem Ventil (2-1) der Klappe (2) verbunden ist,
* der mit einem Spann-Anschlag versehen ist,
- eine Spannvorrichtung, die mit dem Schlitten durch eine Verbindung gekoppelt ist, die durch eine Auslösevorrichtung gelöst werden kann, sobald sich der Schlitten in einer Spannstellung befindet, und
- einen vom Gehäuse gehaltenen Hebel, der mit dem Anschlag des Schlittens zusammenwirkt, um ihn in der Spannstellung zu halten,
**dadurch gekennzeichnet, dass**
der Schlitten (10), der im Gehäuse (3) zwischen der Spannstellung (Richtung A) und der ausgelösten Stellung (Richtung B) (in Richtung D) verschiebbar geführt wird, Folgendes umfasst:
- eine Auflage (13) für die Feder (70) zum Sammeln von mechanischer Auslöseenergie,
- ein Auflageorgan (12) für ein Spannorgan (30), das den Schlitten (10) von seiner ausgelösten Stellung in seine Spannstellung bringt, um sich anschließend am Ende der Spannbewegung vom Auflageorgan (12) zu trennen,
- eine Verriegelungsnut (14-1) zur Aufnahme eines von einem Verriegelungsarm (40) gehaltenen Verriegelungsorgans (42), das im Gehäuse schwenkbar montiert ist (41) und durch eine Feder (44) in seine Verriegelungsstellung gedrückt wird,
- einen im Gehäuse montierten Entriegelungshebel (50), der mit Folgendem zusammenwirkt: einerseits mit einer magnetischen Haltevorrichtung (60), die den Hebel in der verriegelten Stellung hält, und andererseits mit einer Feder (53), die den Hebel (50) in seine entriegelte Stellung drückt, indem der Arm (40) in seine entriegelte Stellung geführt wird,
- einen Steuerschaltkreis (5), der die Steuerung der Auslösung gewährleistet, indem auf die magnetische Haltevorrichtung (60) und auf das Betätigungsorgan (30) zur Spannbewegung des Schlittens (10) eingewirkt wird.

2. Antrieb nach Anspruch 1,
**dadurch gekennzeichnet, dass**
der Schlitten (10) eine mit einem Fenster (15) versehene Platte ist, wobei ihr Rand, welcher der Verschiebungsrichtung (D) zugewandt ist, die Zahnstange (11) bildet, und wobei das Zahnrad (20) in der Ebene der Platte im Fenster (15) angeordnet ist.

3. Antrieb nach Anspruch 2,
**dadurch gekennzeichnet, dass**
die Verriegelungsnut (14-1) in einer Führung (14) der Platte gebildet ist und
die Führung (14) eine Rampe (14-3) bildet, um den Arm (40) zu schwenken und den Hebel (50) gegen die magnetische Haltevorrichtung (60) zu drücken und ihn hier durch Magnetwirkung zu fixieren.

4. Antrieb nach Anspruch 1,
**dadurch gekennzeichnet, dass**
der Hebel (50) an der Drehachse (41) montiert ist, die den Arm (40) trägt, wobei dieser einen Anschlag (46) für den Entriegelungshebel (50) aufweist.

5. Antrieb nach Anspruch 1,
**dadurch gekennzeichnet, dass**
der Entriegelungshebel (50) mit einer ferromagnetischen Platte (54) versehen ist, die mit der magnetischen Haltevorrichtung (60) zusammenwirkt.

6. Antrieb nach Anspruch 1,
**dadurch gekennzeichnet, dass**
der Schlitten (10) eine Zunge (17) umfasst, die die Auflage (13) der Speicherfeder (70) verlängert, um sie zu führen.

7. Antrieb nach Anspruch 1,
**dadurch gekennzeichnet, dass**
der Entriegelungsarm (40) durch zwei Platten (40A, 40B) gebildet wird, die beiderseits des Schlittens angeordnet sind und zwischen ihnen die Rolle (42) tragen, die das Verriegelungsorgan bildet.

8. Antrieb nach Anspruch 7,
**dadurch gekennzeichnet, dass**
der Teil (40B) des Verriegelungsarms eine gebogene Klaue (46) umfasst und das Gehäuse (3) ein Mittel zur manuellen Auslösung aufnimmt, das durch eine Achse (82) gebildet wird, die einen Stift (81) trägt, der gegen die gebogene Klaue (46) des Verriegelungsarms drückt, wobei die Achse (82) außerhalb des Gehäuses mit einem mechanischen Betätigungsmittel versehen ist, um diese Achse zu drehen und die Auslösung des Antriebs zu bewirken.

## Claims

1. Actuator for a valve, especially the flap of a fire damper which is positioned in the arming position and activated by an activation command associated with an event, having a casing (1) and a drive shaft (4) which is carried by the casing (1), is integral with the flap (2-1) and is connected to a storage spring (70) which is stretched in the arming position and returns the flap (2-1) to the active position, and activating members (60-80) which are controlled by events (outside temperature, inside temperature, electric activation, manual activation),
comprising
- a carriage guided in translation,
* integral in movement with the output shaft comprises a rack (11) which engages with the pinion (20) of the output shaft (4) connected to the flap (2-1) of the valve (2),
* provided with an arming stop,
- an arming device connected to the carriage by means of a connection which can be released by an activating device as soon as the carriage is in the arming position, and
- a lever which is carried by the casing and cooperates with the stop of the carriage in order to hold it in the arming position,
**characterised in that**
the carriage (10) guided in translation (in direction D) in the casing (3) between the arming position (direction A) and the activated position (direction B) comprises
- a support (13) for the mechanical activation energy storage spring (70),
- a support member (12) for an arming member (30) which moves the carriage (10) from its activated position to its arming position and is then separated from the support member (12) at the end of the arming stroke,
- a locking notch (14-1) for receiving a locking member (42) which is carried by a locking arm (40) which is pivotably mounted in the casing (41) and is pushed by a spring (44) towards its locking position,
- an unlocking lever (50) which is mounted in the casing and cooperates on the one hand with a magnetic lock (60) which holds the lever in the locked position and on the other hand with a spring (53) which pushes the lever (50) towards the unlocked position, moving the arm (40) towards the unlocked position,
- a control circuit (5) which controls the activation by acting on the magnetic lock (60) and on the actuating member (30) for the arming movement of the carriage (10).

2. Actuator according to claim 1,
**characterised in that**
the carriage (10) is a plate provided with a window (15), the edge of which oriented in the translation direction (D) forms the rack (11), and the toothed pinion (20) is housed in the window (15) in the plane of the plate.

3. Actuator according to claim 2,
**characterised in that**
the locking notch (14-1) is formed in a guide slot (14) of the plate, and
the guide slot (14) forms a ramp (14-3) for pivoting the arm (40) and pushing the lever (50) against the magnetic lock (60) and attaching it thereto by magnetic action.

4. Actuator according to claim 1,
**characterised in that**
the lever (50) is mounted on the pivot (41) carrying the arm (40), and the latter carries a stop (46) for the unlocking lever (50).

5. Actuator according to claim 1,
**characterised in that**
the unlocking lever (50) is provided with a ferromagnetic plate (54) which cooperates with the magnetic lock (60).

6. Actuator according to claim 1,
**characterised in that**
the carriage (10) comprises a tongue (17) which extends the support (13) of the storage spring (70) in order to guide it.

7. Actuator according to claim 1,
**characterised in that**
the unlocking arm (40) is constituted by two plates (40A, 40B) which are located on either side of the carriage and carry between them the roller (42) forming the locking member.

8. Actuator according to claim 7,
**characterised in that**
part (40B) of the locking arm comprises a turned-up lug (46), and the casing (3) houses a manual activating means which is constituted by a shaft (82) carrying a pin (81) which rests against the turned-up lug (46) of the locking arm, the shaft (82) being provided outside the casing with a mechanical actuating means for rotating the shaft and causing the activation of the actuator.
